# EUROPÄISCHE PATENTSCHRIFT

(11) **EP 1 115 490 B1**
(45) Veröffentlichungstag und Bekanntmachung des Hinweises auf die Patenterteilung: **21.04.2004**
(21) Anmeldenummer: 99946105.6
(22) Anmeldetag: 03.09.1999
(51) Int. Cl.: B01J 27/26, C08G 65/10

(54) **DOPPELMETALLCYANID-KATALYSATOREN FÜR DIE HERSTELLUNG VON POLYETHERPOLYOLEN**
BIMETALLIC CYANIDE CATALYSTS FOR PRODUCING POLYETHER POLYOLS
CATALYSEURS A BASE DE CYANURE BIMETALLIQUE POUR LA PREPARATION DE POLYOLS DE POLYETHER

(30) Priorität: 16.09.1998 DE 19842383
(43) Veröffentlichungstag der Anmeldung: 18.07.2001
(73) Patentinhaber: Bayer MaterialScience AG, 51368 Leverkusen (DE)
(72) Erfinder: OOMS, Pieter, D-47800 Krefeld (DE); HOFMANN, Jörg, D-47829 Krefeld (DE); GUPTA, Pramod, D-50181 Bedburg (DE)
(86) Internationale Anmeldenummer: PCT/EP1999/006474
(87) Internationale Veröffentlichungsnummer: WO 2000/015337

(56) Entgegenhaltungen:
- EP-A- 0 700 949
- US-A- 4 477 589
- US-A- 5 158 922
- US-A- 5 714 428

## Beschreibung

Die Erfindung betrifft neue Doppelmetallcyanid (DMC)-Katalysatoren für die Herstellung von Polyetherpolyolen durch Polyaddition von Alkylenoxiden an aktive Wasserstoffatome aufweisende Starterverbindungen.

Doppelmetallcyanid (DMC)-Katalysatoren für die Polyaddition von Alkylenoxiden an aktive Wasserstoffatome aufweisende Starterverbindungen sind bekannt (siehe beispielsweise US 3 404 109, US 3 829 505, US 3 941 849 und US 5 158 922). Der Einsatz dieser DMC-Katalysatoren für die Herstellung von Polyetherpolyolen bewirkt insbesondere eine Reduzierung des Anteils an monofunktionellen Polyethern mit endständigen Doppelbindungen, sogenannten Monoolen, im Vergleich zu der konventionellen Herstellung von Polyetherpolyolen mittels Alkali-Katalysatoren, wie Alkalihydroxiden. Die so erhaltenen Polyetherpolyole können zu hochwertigen Polyurethanen (z.B. Elastomere, Schäume, Beschichtungen) verarbeitet werden. DMC-Katalysatoren werden gewöhnlich erhalten, indem man eine wäßrige Lösung eines Metallsalzes mit der wäßrigen Lösung eines Metallcyanidsalzes in Gegenwart eines organischen Komplexliganden, z.B. eines Ethers. umsetzt. In einer typischen Katalysatorpräparation werden beispielsweise wäßrige Lösungen von Zinkchlorid (im Überschuß) und Kaliumhexacyanocobaltat gemischt und anschließend Dimethoxyethan (Glyme) zur gebildeten Suspension gegeben. Nach Filtration und Waschen des Katalysators mit wäßriger Glyme-Lösung wird ein aktiver Katalysator der allgemeinen Formel

Zn₃[Co(CN)₆]₂ • x ZnCl₂ • yH₂O • z Glyme

erhalten (siehe z.B. EP 700 949).

Aus JP 4 145 123, US 5 470 813, EP 700 949, EP 743 093, EP 761 708 und WO 97/40086 sind DMC-Katalysatoren bekannt, die durch Einsatz von tert.-Butanol als organischem Komplexliganden (allein oder in Kombination mit einem Polyether (EP 700 949, EP 761 708, WO 97/40086)) den Anteil an monofunktionellen Polyethern mit endständigen Doppelbindungen bei der Herstellung von Polyetherpolyolen weiter reduzieren. Darüber hinaus wird durch den Einsatz dieser DMC-Katalysatoren die Induktionszeit bei der Polyadditionsreaktion der Alkylenoxide mit entsprechenden Starterverbindungen reduziert und die Katalysatoraktivität erhöht.

Aufgabe der vorliegenden Erfindung war es, weiter verbesserte DMC-Katalysatoren für die Polyaddition von Alkylenoxiden an entsprechende Starterverbindungen zur Verfügung zu stellen, die eine im Hinblick auf die bislang bekannten Katalysatortypen erhöhte Katalysatoraktivität aufweisen. Dies führt durch Verkürzung der Alkoxylierungszeiten zu einer verbesserten Wirtschaftlichkeit des Herstellprozesses von Polyetherpolyolen. Idealerweise kann durch die erhöhte Aktivität der Katalysator dann in so geringen Konzentrationen (25 ppm oder weniger) eingesetzt werden, daß die sehr aufwendige Katalysatorabtrennung aus dem Produkt nicht mehr notwendig ist, und das Produkt direkt zur Polyurethan-Herstellung verwendet werden kann.

Überraschend wurde jetzt gefunden, daß DMC-Katalysatoren, die einen Carbonsäureester mehrwertiger Alkohole als Komplexliganden enthalten, bei der Polyetherpolyol-Herstellung stark erhöhte Aktivität besitzen.

Gegenstand der vorliegenden Erfindung ist daher ein Doppelmetallcyanid (DMC)-Katalysator, enthaltend
a) eine oder mehrere. vorzugsweise eine. Doppelmetallcyanid-Verbindung,
b) tert.-Butanol, und
c) einen oder mehrere, vorzugsweise einen, Carbonsäureester von Glycerin, 1,1,1-Trimethylolpropan, Pentaerythrit, Maltose oder Sorbitan mit C₂-C₁₈-Alkylcarbonsäuren;

In dem erfindungsgemäßen Katalysator können gegebenenfalls d) Wasser, vorzugsweise 1 bis 10 Gew.-% und/oder e) eines oder mehrere wasserlösliche Metallsalze, vorzugsweise 5 bis 25 Gew.-%, der Formel (I) M(X)ₙ aus der Herstellung der Doppelmetallcyanidverbindungen a) enthalten sein. In Formel (I) wird M ausgewählt aus den Metallen Zn (II), Fe (II), Ni (II), Mn (II), Co (II), Sn (II), Pb (II), Fe (III), Mo (IV), Mo (VI), Al (III), V (V), V (IV), Sr (II), W (IV), W (VI), Cu (II) und Cr (III). Besonders bevorzugt sind Zn (II), Fe (II), Co (II) und Ni (II). X sind gleich oder verschieden, vorzugsweise gleich und ein Anion, bevorzugt ausgewählt aus der Gruppe der Halogenide, Hydroxide, Sulfate, Carbonate, Cyanate, Thiocyanate, Isocyanate, Isothiocyanate, Carboxylate, Oxalate oder Nitrate. Der Wert für n ist 1, 2 oder 3.

Die in den erfindungsgemäßen Katalysatoren enthaltenen Doppelmetallcyanid-Verbindungen a) sind die Reaktionsprodukte wasserlöslicher Metallsalze und wasserlöslicher Metallcyanidsalze.

Zur Herstellung von Doppelmetallcyanid-Verbindungen a) geeignete wasserlösliche Metallsalze besitzen bevorzugt die allgemeine Formel (I) M(X)ₙ, wobei M ausgewählt wird aus den Metallen Zn (II), Fe (II), Ni (II), Mn (II), Co (II), Sn (II), Pb (II), Fe (III), Mo (IV), Mo (VI), Al (III), V (V), V (IV), Sr (II), W (IV), W (VI), Cu (II) und Cr (III). Besonders bevorzugt sind Zn (II), Fe (II), Co (II) und Ni (II). X sind gleich oder verschieden, vorzugsweise gleich und ein Anion, bevorzugt ausgewählt aus der Gruppe der Halogenide, Hydroxide, Sulfate, Carbonate, Cyanate, Thiocyanate, Isocyanate, Isothiocyanate, Carboxylate, Oxalate oder Nitrate. Der Wert für n ist 1, 2 oder 3.

Beispiele geeigneter wasserlöslicher Metallsalze sind Zinkchlorid, Zinkbromid, Zinkacetat, Zinkacetylacetonat, Zinkbenzoat, Zinknitrat, Eisen(II)sulfat, Eisen(II)bromid, Eisen(II)chlorid, Cobalt(II)chlorid, Cobalt(II)thiocyanat, Nickel(II)chlorid und Nickel(II)nitrat. Es können auch Mischungen verschiedener wasserlöslicher Metallsalze eingesetzt werden.

Zur Herstellung von Doppelmetallcyanid-Verbindungen a) geeignete wasserlösliche Metallcyanidsalze besitzen bevorzugt die allgemeine Formel (II) (Y)ₐ M'(CN)_{b} (A)_{c}, wobei M' ausgewählt wird aus den Metallen Fe(II), Fe(III), Co(II), Co(III), Cr(II), Cr(III), Mn(II), Mn(III), Ir(III), Ni(II), Rh(III), Ru(II), V(IV) und V(V). Besonders bevorzugt wird M' ausgewählt aus den Metallen Co(II), Co(III), Fe(II), Fe(III), Cr(III), Ir(III) und Ni(II). Das wasserlösliche Metallcyanidsalz kann eines oder mehrere dieser Metalle enthalten. Y sind gleich oder verschieden, vorzugsweise gleich, und ein Alkalimetallion oder ein Erdalkalimetallion. A sind gleich oder verschieden, vorzugsweise gleich, und ein Anion, ausgewählt aus der Gruppe der Halogenide, Hydroxide, Sulfate, Carbonate, Cyanate, Thiocyanate, Isocyanate, Isothiocyanate, Carboxylate, Oxalate oder Nitrate. Sowohl a, als auch b und c sind ganzzahlig, wobei die Werte für a, b und c so gewählt sind, daß die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0. Beispiele geeigneter wasserlöslicher Metallcyanidsalze sind Kaliumhexacyanocobaltat(III), Kaliumhexacyanoferrat(II), Kaliumhexacyanoferrat(III), Calciumhexacyanocobaltat(III) und Lithiumhexacyanocobaltat(III).

Bevorzugte Doppelmetallcyanid-Verbindungen a), die in den erfindungsgemäßen Katalysatoren enthalten sind, sind Verbindungen der allgemeinen Formel (III)

Mₓ[M'ₓ,(CN)_{y}]_{z} ,

worin M wie in Formel (I) und
M' wie in Formel (II) definiert ist, und
x, x', y und z ganzzahlig und so gewählt sind, daß die Elektroneutralität der Doppelmetallcyanidverbindung gegeben ist.

Vorzugsweise ist
x = 3, x' = 1, y = 6 und z = 2,
M = Zn(II), Fe(II), Co(II) oder Ni(II) und
M' = Co(III), Fe(III), Cr(III) oder Ir(III).

Beispiele geeigneter Doppelmetallcyanidverbindungen a) sind Zinkhexacyanocobaltat(III), Zinkhexacyanoiridat(III), Zinkhexacyanoferrat(III) und Cobalt(II)hexacyanocobaltat(III). Weitere Beispiele geeigneter Doppelmetallcyanid-Verbindungen sind z.B. US 5 158 922 (Spalte 8, Zeilen 29 - 66) zu entnehmen. Besonders bevorzugt verwendet wird Zinkhexacyanocobaltat(III).

Der organische Komplexligand wird entweder während der Katalysatorpräparation zugegeben oder unmittelbar nach der Ausfällung der Doppelmetallcyanidverbindung a). Gewöhnlich wird der organische Komplexligand im Überschuß eingesetzt.

Die erfindungsgemäßen DMC-Katalysatoren enthalten die Doppelmetallcyanid-Verbindungen a) in Mengen von 20 bis 90 Gew.-%, bevorzugt 25 bis 80 Gew.-%, bezogen auf die Menge des fertigen Katalysators, und die organischen Komplexliganden b) in Mengen von 0,5 bis 30, bevorzugt 1 bis 25 Gew.-%, bezogen auf die Menge des fertigen Katalysators. Die erfindungsgemäßen DMC-Katalysatoren enthalten üblicherweise 1 bis 50 Gew.-%, bevorzugt 1 bis 20 Gew.-%, bezogen auf die Menge des fertigen Katalysators, an Carbonsäureester c):

Als Carbonsäurekomponente kommen bevorzugt Alkylcarbonsäuren wie Essigsäure, Buttersäure, Isovaleriansäure, Capronsäure, Caprylsäure, Caprinsäure, Laurinsäure, Myristinsäure, Palmitinsäure. Stearinsäure, Ölsäure, Linolsäure oder Linolensäure.

Als Komponente c) werden Carbonsäureester von 1,2,3-Propantriol (Glycerin), 1,1,1-Trimethylolpropan, Pentaerythrit, Maltose oder Sorbitan mit C₂-C₁₈-Alkylcarbonsäuren eingesetzt.

Besonders bevorzugte Carbonsäureester c) sind Mono-. Di-, Tri- oder Tetraester von 1,2,3-Propantriol (Glycerin), Pentaerythrit oder Sorbitan mit C₂-C₁₈-Alkylcarbonsäuren.

Methoden zur Herstellung von Carbonsäureestern mehrwertiger Alkohole oder Isolierung aus Fetten sind allgemein gut bekannt und beispielsweise ausführlich beschrieben in "Kirk-Othmer, Encyclopedia of Chemical Technology", Band 9, 3. Auflage, 1980, S. 795 ff.; "Römpp, Lexikon Chemie", S. 1571, 10. Auflage, Stuttgart/New York, 1997; "Ullmann's Encyclopedia of Industrial Chemistry", Volume A 10, 5 th Edition, 1987, S. 173 bis 218.

Es können auch beliebige Mischungen der vorgenannten Carbonsäureester eingesetzt werden. Die mehrwertigen Alkohole können mit gleichen oder auch voneinander verschiedenen Carbonsäuren verestert sein.

Die Analyse der Katalysatorzusammensetzung erfolgt üblicherweise mittels Elementaranalyse, Thermogravimetrie oder extraktiver Entfernung des Anteils an Carbonsäureester mehrwertiger Alkohole mit anschließender gravimetrischer Bestimmung.

Die erfindungsgemäßen Katalysatoren können kristallin, teilkristallin oder amorph sein. Die Analyse der Kristallinität erfolgt üblicherweise durch Pulverröntgendiffraktometrie.

Die erfindungsgemäße Katalysatoren enthalten
a) Zinkhexacyanocobaltat (III),
b) tert.-Butanol und
c) einen Carbonsäureester von Glycerin, 1,1,1-Trimethylolpropan, Pentaerythrit, Maltose oder Sorbitan mit C₂-C₁₈-Alkylcarbonsäuren.

Die Herstellung der erfindungsgemäßen DMC-Katalysatoren erfolgt üblicherweise in wäßriger Lösung durch Umsetzung von α) Metallsalzen, insbesondere der Formel (I) mit Metallcyanidsalzen insbesondere der Formel (II) β) von tert.-Butanol und γ) Carbonsäureestern mehrwertiger Alkohole gemäß c).

Bevorzugt werden dabei zunächst die wäßrigen Lösungen des Metallsalzes (z.B. Zinkchlorid, eingesetzt im stöchiometrischen Überschuß (mindestens 50 Mol-%, bezogen auf das Metallcyanidsalz)) und des Metallcyanidsalzes (z.B. Kaliumhexacyanocobaltat) in Gegenwart von b) tert.-Butanol umgesetzt, wobei sich eine Suspension bildet, die die Doppelmetallcyanid-Verbindung a) (z.B. Zinkhexacyanocobaltat), Wasser d), überschüssiges Metallsalz e), und tert.-Butanol b) enthält.

Tert.-Butanol b) kann dabei in der wäßrigen Lösung des Metallsalzes und/oder des Metallcyanidsalzes vorhanden sein, oder wird der nach Ausfällung der Doppelmetallcyanid-Verbindung a) erhaltenen Suspension unmittelbar zugegeben. Es hat sich als vorteilhaft erwiesen, die wäßrigen Lösungen und tert.-Butanol b) unter starkem Rühren zu vermischen. Die gebildete Suspension wird üblicherweise anschließend mit dem Carbonsäureester c) behandelt. Der Carbonsäureester c) wird dabei bevorzugt in einer Mischung mit Wasser und tert.-Butanol b) eingesetzt.

Anschließend erfolgt die Isolierung des Katalysators aus der Suspension durch bekannte Techniken, wie Zentrifugation oder Filtration. In einer bevorzugten Ausführungsvariante wird der isolierte Katalysator anschließend mit einer wäßrigen Lösung von tert.-Butanol b) gewaschen (z.B. durch Resuspendieren und anschließende erneute Isolierung durch Filtration oder Zentrifugation). Auf diese Weise können zum Beispiel wasserlösliche Nebenprodukte, wie Kaliumchlorid, aus dem erfindungsgemäßen Katalysator entfernt werden.

Bevorzugt liegt die Menge an tert.-Butanol b) in der wäßrigen Waschlösung zwischen 40 und 80 Gew.-%, bezogen auf die Gesamtlösung. Weiterhin ist es vorteilhaft, der wäßrigen Waschlösung etwas Carbonsäureester c), bevorzugt im Bereich zwischen 0,5 und 5 Gew.-%, bezogen auf die Gesamtlösung, zuzufügen.

Außerdem ist es vorteilhaft, den Katalysator mehr als einmal zu waschen. Hierzu kann z.B. der erste Waschvorgang wiederholt werden. Bevorzugt ist es aber, für wietere Waschvorgänge nicht wäßrige Lösungen zu verwenden, z.B. eine Mischung aus tert-Butanol und Carbonsäureester c).

Der gewaschene Katalysator wird anschließend, gegebenenfalls nach Pulverisierung, bei Temperaturen von im allgemeinen 20 bis 100°C und bei Drücken von im allgemeinen 0,1 mbar bis Normaldruck (1013 mbar) getrocknet.

Ein weiterer Gegenstand der vorliegenden Erfindung ist die Verwendung der erfindungsgemäßen DMC-Katalysatoren in einem Verfahren zur Herstellung von Polyetherpolyolen durch Polyaddition von Alkylenoxiden an aktive Wasserstoffatome aufweisende Starterverbindungen.

Als Alkylenoxide kommen bevorzugt Ethylenoxid, Propylenoxid. Butylenoxid sowie deren Mischungen zum Einsatz. Der Aufbau der Polyetherketten durch Alkoxylierung kann z.B. nur mit einem monomeren Epoxid durchgeführt werden oder auch statistisch oder blockweise mit 2 oder 3 unterschiedlichen monomeren Epoxiden erfolgen. Näheres ist "Ullmanns Encyclopädie der industriellen Chemie", englischsprachige Ausgabe. 1992, Band A21, Seiten 670 bis 671, zu entnehmen.

Als aktive Wasserstoffatome aufweisende Starterverbindungen werden vorzugsweise Verbindungen mit Molekulargewichten von 18 bis 2000 und 1 bis 8 Hydroxylgruppen eingesetzt. Beispielsweise werden genannt: Ethylenglykol, Diethylenglykol, Triethylenglykol, 1,2-Propylenglykol, 1,4-Butandiol, Hexamethylenglykol, Bisphenol A, Trimethylolpropan, Glycerin. Pentaerythrit, Sorbit, Rohrzucker, abgebaute Stärke oder Wasser.

Vorteilhafterweise werden solche aktive Wasserstoffatome aufweisende Starterverbindungen eingesetzt, die z.B. durch konventionelle Alkalikatalyse aus den zuvor genannten niedermolekularen Startern hergestellt wurden und oligomere Alkoxylierungsprodukte darstellen mit Molekulargewichten von 200 bis 2000.

Die durch die erfindungsgemäßen Katalysatoren katalysierte Polyaddition von Alkylenoxiden an aktive Wasserstoffatome aufweisende Starterverbindungen erfolgt im allgemeinen bei Temperaturen von 20 bis 200°C, bevorzugt im Bereich von 40 bis 180°C, besonders bevorzugt bei Temperaturen von 50 bis 150°C. Die Reaktion kann bei Gesamtdrücken von 0 bis 20 bar durchgeführt werden. Die Polyaddition kann in Substanz oder einem inerten, organischen Lösungsmittel, wie Toluol und/oder THF, durchgeführt werden. Die Menge an Lösungsmittel beträgt üblicherweise 10 bis 30 Gew.-%, bezogen auf die Menge des herzustellenden Polyetherpolyols.

Die Katalysatorkonzentration wird so gewählt, daß unter den gegebenen Reaktionsbedingungen eine gute Beherrschung der Polyadditionsreaktion möglich ist. Die Katalysatorkonzentration liegt im allgemeinen im Bereich von 0,0005 Gew.-% bis 1 Gew.-%, bevorzugt im Bereich von 0,001 Gew.-% bis 0.1 Gew.-%, besonders bevorzugt im Bereich von 0,001 bis 0,0025 Gew.-%, bezogen auf die Menge des herzustellenden Polyetherpolyols.

Die Molekulargewichte der nach dem erfindungsgemäßen Verfahren hergestellten Polyetherpolyole liegen im Bereich von 500 bis 100000 g/mol, bevorzugt im Bereich von 1000 bis 50000 g/mol, besonders bevorzugt im Bereich von 2000 bis 20000 g/mol.

Die Polyaddition kann kontinuierlich oder diskontinuierlich, z.B. in einem Batch- oder im Semibatchverlahren durchgeführt werden.

Die erfindungsgemäßen Katalysatoren können wegen ihrer deutlich erhöhten Aktivität in sehr niedrigen Konzentrationen eingesetzt werden (25 ppm und weniger, bezogen auf die Menge des herzustellenden Polyetherpolyols). Werden die in Gegenwart der erfindungsgemäßen Katalysatoren hergestellten Polyetherpolyole zur Herstellung von Polyurethanen verwendet (Kunststoffhandbuch, Bd. 7, Polyurethane, 3. Aufl., 1993, S. 25 bis 32 und 57 bis 67), kann auf eine Entfernung des Katalysators aus dem Polyetherpolyol verzichtet werden, ohne daß die Produktqualitäten des erhaltenen Polyurethans nachteilig beeinflußt werden.

Die nachfolgenden Beispiele erläutern die Erfindung, haben jedoch keinerlei limitierenden Charakter.

### Beispiele

### Katalysatorpräparation

### Beispiel A

### Herstellung eines DMC-Katalysators mit Einsatz von Glycerintricapronat (Katalysator A).

Zu einer Lösung aus 4 g (12 mmol) Kaliumhexacyanocobaltat in 70 ml destilliertem Wasser gibt man unter starkem Rühren (24000 U/min) eine Lösung aus 12,5 g (91,5 mmol) Zinkchlorid in 20 ml destilliertem Wasser. Unmittelbar danach wird eine Mischung aus 50 g tert.-Butanol und 50 g destilliertem Wasser zur gebildeten Suspension gegeben und anschließend 10 min stark gerührt (24 000 U/min). Dann wird eine Mischung aus 1 g eines Glycerintricapronats (Firma Aldrich), 1 g tert.-Butanol und 100 g destilliertem Wasser zugegeben und 3 min gerührt (1000 U/min). Der Feststoff wird durch eine Filtration isoliert, dann 10 min mit einer Mischung aus 70 g tert.-Butanol, 30 g destilliertem Wasser und 1 g des obigen Glycerintricapronats gerührt (10 000 U/min) und erneut filtriert. Abschließend wird noch einmal 10 min mit einer Mischung aus 100 g tert.-Butanol und 0,5 g des obigen Glycerintricapronats gerührt (10 000 U/min). Nach Filtration wird der Katalysator bei 50°C und Normaldruck bis zur Gewichtskonstanz getrocknet.

Ausbeute an getrocknetem, pulverförmigem Katalysator: 5,3 g

Elementaranalyse, Thermogravimetrische Analyse und Extraktion:
Cobalt = 12,3 %. Zink = 27,0 %. tert.-Butanol = 7,2 %, Glycerintricapronat = 3,7 %

### Beispiel B

### Herstellung eines DMC-Katalysators mit Einsatz von Glycerintricaprylat (Katalysator B).

Es wurde verfahren wie in Beispiel A, jedoch wurde Glycerintricaprylat (Rilanit GTC®, Firma Henkel) anstelle des Glycerintricapronats aus Beispiel A eingesetzt.

Ausbeute an getrocknetem, pulverförmigem Katalysator: 5,0 g

Elementaranalyse, Thermogravimetrische Analyse und Extraktion:
Cobalt = 12,4 %, Zink = 26,9 %, tert.-Butanol = 8,6 %, Glycerintricaprylat = 8,4 %

### Beispiel C

Herstellung eines DMC-Katalysators mit Einsatz von Pentaerythrittetracaprylat (Katalysator C).

Es wurde verfahren wie in Beispiel A, jedoch wurde Pentaerythrittetracaprylat (Rilanit PEC 4®, Firma Henkel) anstelle des Glycerintricapronats aus Beispiel A eingesetzt.

Ausbeute an getrocknetem, pulverförmigem Katalysator: 4,0 g

Elementaranalyse, Thermogravimetrische Analyse und Extraktion:
Cobalt = 13,8 %, Zink = 28,6 %, tert.-Butanol = 9,9 %, Pentaerythrittetracaprylat = 8,6%

### Beispiel D (Vergleich)

### Herstellung eines DMC-Katalysators mit Einsatz von tert.-Butanol ohne Carbonsäureester mehrwertiger Alkohole (Katalysator D, Synthese gemäß JP 4 145 123).

Zu einer Lösung aus 4 g (12 mmol) Kaliumhexacyanocobaltat in 75ml destilliertem Wasser gibt man unter starkem Rühren (24 000 U/min) eine Lösung aus 10 g (73,3 mmol) Zinkchlorid in 15 ml destilliertem Wasser. Unmittelbar danach wird eine Mischung aus 50 g tert.-Butanol und 50 g destilliertem Wasser zur gebildeten Suspension gegeben und anschließend 10 min stark gerührt (24 000 U/min). Der Feststoff wird durch eine Filtration isoliert. dann 10 min mit 125 g einer Mischung aus tert.-Butanol und destilliertem Wasser (70/30; w/w) gerührt (10 000 U/min) und erneut filtriert. Abschließend wird noch einmal 10 min mit 125 g tert.-Butanol gerührt (10 000 U/min). Nach Filtration wird der Katalysator bei 50°C und Normaldruck bis zur Gewichtskonstanz getrocknet.

Ausbeute an getrocknetem, pulverförmigem Katalysator: 3,08 g

Elementaranalyse:
Cobalt = 13,6 %, Zink = 27,4 %, tert.-Butanol = 14,2 %

### Herstellung von Polyetherpolyolen

### Allgemeine Durchführung

In einem 500 ml Druckreaktor werden 50 g Polypropylenglykol-Starter (Molekulargewicht = 1 000 g/mol) und 3 bis 5 mg Katalysator (15 bis 25 ppm, bezogen auf die Menge des herzustellenden Polyetherpolyols) unter Schutzgas (Argon) vorgelegt und unter Rühren auf 105°C aufgeheizt. Anschließend wird Propylenoxid (ca. 5 g) auf einmal zudosiert. bis der Gesamtdruck auf 2,5 bar angestiegen ist. Weiteres Propylenoxid wird erst dann wieder zudosiert, wenn ein beschleunigter Druckabfall im Reaktor beobachtet wird. Dieser beschleunigte Druckabfall zeigt an, daß der Katalysator aktiviert ist. Anschließend wird das restliche Propylenoxid (145 g) kontinuierlich bei einem konstanten Gesamtdruck von 2,5 bar zudosiert. Nach vollständiger Propylenoxid-Dosierung und 2 Stunden Nachreaktionszeit bei 105°C werden flüchtige Anteile bei 90°C (1 mbar) abdestilliert und anschließend auf Raumtemperatur abgekühlt.

Die erhaltenen Polyetherpolyole wurden durch Ermittlung der OH-Zahlen, der Doppelbindungsgehalte und der Viskositäten charakterisiert.

Der Reaktionsverlauf wurde anhand von Zeit-Umsatz-Kurven (Propylenoxid-Verbrauch [g] vs. Reaktionszeit [min]) verfolgt. Aus dem Schnittpunkt der Tangente an den steilsten Punkt der Zeit-Umsatz-Kurve mit der verlängerten Basislinie der Kurve wurde die Induktionszeit bestimmt. Die für die Katalysatoraktivität maßgeblichen Propoxylierungszeiten entsprechen dem Zeitraum zwischen Katalysatoraktivierung (Ende der Induktionsperiode) und dem Ende der Propylenoxid-Dosierung. Die Gesamtreaktionszeit ist die Summe aus Induktions- und Propoxylierungszeit.

### Beispiel 1

### Herstellung von Polyetherpolyol mit Katalysator A (15 ppm)

| | | |
|---|---|---|
| Induktionszeit | | 210 min |
| Propoxylierungszeit | | 275 min |
| Gesamtreaktionszeit | | 485 min |
| Polyetherpolyol | OH-Zahl (mg KOH/g) | 29,8 |
| | Doppelbindungsgehalt (mMol/kg) | 6 |
| | Viskosität 25°C (mPas) | 965 |

Ohne Entfernung des Katalysators beträgt der Metallgehalt im Polyol: Zn = 4 ppm, Co = 2 ppm.

### Beispiel 2

### Herstellung von Polyetherpolyol mit Katalysator B (25 ppm)

| | | |
|---|---|---|
| Induktionszeit | | 180 min |
| Propoxylierungszeit | | 115 min |
| Gesamtreaktionszeit | | 295 min |
| Polyetherpolyol | OH-Zahl (mg KOH/g) | 29,6 |
| | Doppelbindungsgehalt (mMol/kg) | 9 |
| | Viskosität 25°C (mPas) | 914 |

### Beispiel 3

### Herstellung von Polyetherpolyol mit Katalysator C (25 ppm)

| | | |
|---|---|---|
| Induktionszeit | | 130 min |
| Propoxylierungszeit | | 145 min |
| Gesamtreaktionszeit | | 275 min |
| Polyetherpolyol | OH-Zahl (mg KOH/g) | 29,4 |
| | Doppelbindungsgehalt (mMol/kg) | 9 |
| | Viskosität 25°C (mPas) | 917 |

### Vergleichsbeispiel 4

### Katalysator D (15 ppm) zeigt unter den oben beschriebenen Reaktionsbedingungen keine Aktivität.

Beispiele 1 bis 3 zeigen, daß die neuen, erfindungsgemäßen DMC-Katalysatoren aufgrund ihrer deutlich erhöhten Aktivität bei der Polyetherpolyol-Herstellung in so geringen Konzentrationen eingesetzt werden können, daß auf eine Abtrennung des Katalysators aus dem Polyol verzichtet werden kann.

## Patentansprüche

1. Doppelmetatlcyanid (DMC)-Katalysator enthaltend
a) eine oder mehrere Doppelmetallcyanid-Verbindungen,
b) tert.-Butanol, und
c) einen oder mehrere Carbonsäureester von Glycerin, 1,1,1-Trimethylolpropan, Pentaerythrit, Maltose oder Sorbitan mit C₂-C₁₈-Alkylcarbonsäure.

2. DMC-Katalysator nach Anspruch 1, zusätzlich enthaltend d) Wasser und/oder e) wasserlösliches Metallsalz.

3. DMC-Katalysator nach Anspruch 1 oder 2, worin die Doppelmetallcyanid-Verbindung Zinkhexacyanocobaltat(III) ist.

4. DMC-Katalysator nach einem der Ansprüche 1 bis 3, worin der Carbonsäureester c) ein Mono-, Di- oder Triester von Glycerin oder ein Mono-, Di-, Tri- oder Tetraester von Pentaerythrit oder Sorbitan mit einer Alkylcarbonsäure mit 2 bis 18 C-Atomen ist.

5. Verfahren zur Herstellung eines DMC-Katalysators nach einem der Ansprüche 1 bis 4, enthaltend die Schritte:
i) Umsetzung in wäßriger Lösung von
α) Metallsalzen mit Metallcyanidsalzen
β) t-Butanol, und
γ) Carbonsäureestern mehrwertiger Alkohole gemäß c),
ii) Isolierung, Waschen und Trocknen des in Schritt i) erhaltenen Katalysators.

6. Verfahren zur Herstellung von Polyetherpolyolen durch Polyaddition von Alkylenoxiden an aktive Wasserstoffatome aufweisenden Starterverbindungen, in Gegenwart eines oder mehrerer DMC-Katalysatoren nach einem der Ansprüche 1 bis 4.

7. Verwendung eines oder mehrerer DMC-Katalysatoren nach einem der Ansprüche 1 bis 4, zur Herstellung von Polyetherpolyolen durch Polyaddition von Alkylenoxiden an aktive Wasserstoffatome aufweisende Starterverbindungen.

## Claims

1. Double metal cyanide (DMC) catalyst containing
a) one or more double metal cyanide compounds,
b) tert.-butanol and
c) one or more carboxylic acid esters of glycerol, 1,1,1-trimethylolpropane, pentaerythritol, maltose or sorbitan with C₂-C₁₈-alkylcarboxylic acids.

2. DMC catalyst according to claim 1, additionally comprising d) water and/or e) water-soluble metal salt.

3. DMC catalyst according to claim 1 or 2, wherein the double metal cyanide compound is zinc hexacyanocobaltate(III).

4. DMC catalyst according to any one of claims 1 to 3, wherein the carboxylic acid ester c) is a mono-, di- or tri-ester of glycerol or a mono-, di-, tri- or tetra-ester of pentaerythritol or sorbitan with an alkylcarboxylic acid having from 2 to 18 carbon atoms.

5. Process for the preparation of a DMC catalyst according to any one of claims 1 to 4, comprising the steps:
i) reacting in aqueous solution
α) metal salts with metal cyanide salts,
β) tert.-butanol and
γ) carboxylic acid esters of polyhydric alcohols according to c),
ii) isolating, washing and drying the catalyst obtained in step i).

6. Process for the preparation of polyether polyols by polyaddition of alkylene oxides to starter compounds containing active hydrogen atoms, in the presence of one or more DMC catalysts according to any one of claims 1 to 4.

7. Use of one or more DMC catalysts according to any one of claims 1 to 4 for the preparation of polyether polyols by polyaddition of alkylene oxides to starter compounds containing active hydrogen atoms.

## Revendications

1. Catalyseur à base de cyanure bimétallique (CBM) contenant
a) un ou plusieurs composés de cyanure bimétallique,
b) du tert.-butanol et
c) un ou plusieurs esters d'acide carboxylique de glycérine, de 1,1,1-triméthylolpropane, de pentaérythritol, de maltose ou de sorbitane avec des acides C₂-C₁₈-alkylcarboxyliques.

2. Catalyseur CBM selon la revendication 1, contenant par ailleurs d) de l'eau et/ou e) un sel métallique hydrosoluble.

3. Catalyseur CBM selon l'une des revendications 1 ou 2, dans lequel le composé de cyanure bimétallique est l'hexacyanocobaltate de zinc (III).

4. Catalyseur CBM selon l'une des revendications 1 à 3, dans lequel l'ester d'acide carboxylique c) est un mono, di ou triester de glycérine ou un mono, di, tri ou tétraester de pentaérythritol ou de sorbitane avec un acide alkylcarboxylique avec 2 à 18 atomes C.

5. Procédé de préparation d'un catalyseur CBM selon l'une des revendications 1 à 4, contenant les étapes suivantes:
i) mise en réaction dans une solution aqueuse:
α) de sels métalliques avec des sels de cyanure métallique
β) de t-butanol et
γ) d'esters d'acide carboxylique d'alcools polyvalents selon c),
ii) isolation, lavage et séchage du catalyseur obtenu dans l'étape i).

6. Procédé de préparation de polyétherpolyols par polyaddition d'alkylèneoxydes sur des composés de départ présentant des atomes d'hydrogène actif en présence d'un ou plusieurs catalyseurs CBM selon l'une des revendications 1 à 4.

7. Mise en oeuvre d'un ou plusieurs catalyseurs CBM selon l'une des revendications 1 à 4, pour la préparation de polyétherpolyols par polyaddition d'alkylèneoxydes sur des composés de départ présentant des atomes d'hydrogène actif.
